# DEMANDE DE BREVET EUROPEEN

(11) **EP 3 323 532 A1**
(43) Date de publication de la demande: **23.05.2018**
(21) Numéro de dépôt: 17202150.3
(22) Date de dépôt: 16.11.2017
(51) Int. Cl.: B22F 3/105, B29C 67/00, B33Y 80/00, B33Y 10/00, B33Y 30/00, B22F 3/10, B22F 7/08, A61L 27/00

(54) **PROCEDE D'INTEGRATION D'UN CORPS ETRANGER AU SEIN D'UNE PIECE OBTENUE PAR FABRICATION ADDITIVE PAR FUSION SELECTIVE PAR LASER**

(30) Priorité: 16.11.2016 FR 1661092
(71) Demandeur: Poly Shape, 91280 Saint-Pierre-du-Perray (FR)
(72) Inventeur: RIAS, Anne-Lise, 92130 ISSY LES MOULINEAUX (FR); VAISSIER, Benjamin, 21000 DIJON (FR); SEGONDS, Frédéric, 91730 CHAMARANDE (FR); BOUCHARD, Carole, décédé(e) (FR); VAYRE, Benjamin, 13580 La Fare les Oliviers (FR); ABED, Stéphane, 13300 SALON DE PROVENCE (FR)
(74) Mandataire: Santarelli

(57) **Abrégé**

Un procédé d'intégration d'un corps étranger au sein d'une pièce, comporte des étapes de :
- obtention dudit corps étranger,
- fabrication partielle de la pièce de manière additive par fusion laser, par cycles de dépose de couches d'une poudre métallique ou oxyde puis, au moyen d'un faisceau laser commandé en balayage le long desdites couches, de mise en fusion au moins partielle de la poudre de la dernière couche déposée avec les couches précédemment formées selon la géométrie de la pièce à fabriquer, jusqu'à un niveau affleurant la face supérieure d'une cavité destinée à recevoir ce corps étranger,
- interruption de la fabrication de cette pièce lorsque ce niveau est atteint, élimination de la poudre contenue dans la cavité et introduction du corps étranger dans cette cavité,
- reprise de la fabrication additive de la pièce jusqu'à ce qu'elle soit complète.

## Description

L'invention concerne la fabrication de pièces devant comporter une cavité, ouverte ou fermée (il peut y avoir plusieurs cavités), contenant un corps étranger (voire plusieurs) pouvant être liquide, solide, pulvérulent ou fibreux, massif ou filaire (il peut s'agir de fibres), de manière fixe ou libre dans la cavité.

Une manière habituelle de fabrication de telles pièces consiste à prévoir deux parties telles que la cavité débouche à l'interface séparant ces parties, ces parties étant assemblées après mise en place du corps étranger.

Avec le développement de la technique de fabrication additive (parfois appelée « impression 3D »), des recherches ont été conduites en vue d'évaluer si cette technique était applicable lorsqu'on veut encapsuler un corps étranger dans un corps massif.

Il est rappelé que la technique de fabrication additive est une technique de mise en forme d'une pièce par ajout de matière, par empilement de couches successives que l'on lie le plus souvent par fusion aux précédentes, en opposition aux techniques de fabrication par enlèvement de matière, tel que l'usinage.

Sous l'expression générale de « fabrication additive » sont regroupés de nombreux procédés différents tels que par exemple, la stéréo-lithographie, la fusion par faisceau d'électrons, l'extrusion de filament, la photo-polymérisation continue ou le frittage infrarouge rapide. Parmi l'ensemble des procédés, certains sont particulièrement porteurs pour des applications industrielles ; c'est le cas du procédé de fusion sélective sur lit de poudre métallique dite « Fusion sélective par laser » ou plus simplement « Fusion par laser » ou en anglais Laser Beam Melting (ou LBM ; une autre appellation est SLM pour Selective Laser Melting) ; c'est cette forme particulière de fabrication additive que vise l'invention. En pratique, compte tenu des gammes de températures pouvant être obtenues, cette technique de fusion laser s'applique non seulement à des poudres métalliques mais aussi à des poudres d'oxydes (ou céramiques).

Il est à noter que la fusion par laser est caractérisée par, d'une part, des températures élevées dans le lit de poudre et à proximité du laser et, d'autre part, par le besoin de la présence de supports pour maintenir les surfaces positionnées en un angle inférieur à 45° par rapport au plateau horizontal de fabrication. Elle se distingue notamment de la technique de fabrication par frittage consistant à former un corps (on parle de corps vert) ayant approximativement la forme définitive voulue, par agglomération de grains de poudre, et à chauffer l'ensemble de ce corps en sorte de le densifier. Elle se distingue également de la technique de fusion par faisceau d'électrons (ou Electron Beam Melting ou EBM) par le fait que les faisceaux laser, pouvant être plus étroits que les faisceaux d'électrons, permettent une plus grande précision, mais en exigeant une plus haute température de travail. Elle se distingue en outre de la technique de fabrication additive par extrusion (dont un exemple est la technique dite : « Fused Deposition Modelling » ou FDM en anglais) qui implique de déposer de la matière déjà mise en fusion.

On connait déjà d'après le document WO - 2015/112858 un corps comportant un capteur interne et un procédé de fabrication de manière additive. Il y est proposé de fabriquer un substrat comportant une cavité, d'y insérer le capteur, par exemple une puce RFID (acronyme pour l'expression anglaise « Radio Frequency IDentity ») puis de couvrir le substrat d'une couche d'encapsulation longeant la face du substrat dans laquelle débouche la cavité, tout en obturant cette cavité ; sous la couche d'encapsulation peut être formée une couche protectrice séparant le substrat et la cavité de la couche d'encapsulation. Le substrat peut être formé par moulage, usinage ou par fabrication additive et la cavité peut être formée au cours de la fabrication du substrat ou après cette fabrication, par usinage. La couche de protection peut être fabriquée par moulage, usinage et/ou fabrication additive, de même que la couche d'encapsulation (la fabrication additive de cette couche peut être effectuée conjointement, ou non, avec la couche de protection). Cette couche d'encapsulation est assemblée au substrat par une grande variété de techniques possibles. La cavité est remplie d'une résine enrobant le capteur. La couche d'encapsulation est typiquement métallique. Ce document respecte le principe précité de la formation de deux pièces raccordées en une interface dans laquelle débouche la cavité.

Par le document EP - 2 837 444 on connait par ailleurs un corps contenant un insert d'identification garantissant que ce corps a un certain nombre de propriétés prédéterminées (cela permet notamment de lutter contre la contrefaçon). Le corps est fabriqué en un premier temps, de manière additive jusqu'à former une cavité ouverte ; après que l'insert d'identification a été mis en place dans la cavité, celle-ci est obturée de manière étanche, de manière additive, en reprenant la fabrication additive avec le même matériau jusqu'à obtenir la forme finale du corps. Le matériau de l'insert, par exemple une matière plastique opaque, est différent de celui du corps, typiquement un solide métallique dont la présence peut être détectée de manière non-destructive depuis l'extérieur, et sa forme est caractéristique du corps considéré. Cet insert peut être un corps magnétique. En variante, le corps est en métal. Ce corps étranger peut être constitué d'une zone formée de manière additive à partir d'un matériau différent de celui du reste du corps.

Il peut être noté que ce dernier document est muet sur les modalités de formation de la cavité permettant qu'un corps étranger puisse être mis en place dans la cavité et comment la reprise de fabrication additive est effectuée ensuite. Bien que la notion générale de fabrication additive soit mentionnée, c'est une technique d'extrusion additive qui est décrite, à propos de matières plastiques et non métalliques, plus précisément à partir de fils dévidés mis en fusion dès leur dépôt. Il n'y a donc aucun enseignement utilisable avec la technique de fusion par laser visée par l'invention (impliquant la formation de couches de poudre métallique et la mise en fusion d'une partie sélectionnée d'une telle poudre comme indiqué au début de ce document) ; en outre, on croit comprendre que, en pratique, l'enseignement de ce document se limite au cas où le corps étranger est solide et occupe la totalité du volume de la cavité (bien qu'il soit envisagé que le corps étranger puisse être plus petit que la cavité, rien n'est indiqué comment un tel résultat peut être obtenu).

Pourtant, de manière générale, lorsqu'on cherche à réaliser l'intégration d'un corps étranger dans un corps environnant métallique ou céramique, on constate qu'aucune des techniques connues n'est suffisamment souple ou polyvalente pour permettre la fabrication d'un corps, pouvant être en une matière métallique ou céramique, contenant un ou plusieurs corps étranger(s) solides, liquides, pulvérulents ou fibreux, massifs ou filaires, ou éventuellement gazeux sans nuire à l'esthétique finale.

Pour surmonter ce manque, l'invention propose un procédé d'intégration d'un corps étranger au sein d'une pièce, comportant des étapes de :
- obtention dudit corps étranger,
- fabrication partielle de la pièce de manière additive par fusion laser, par cycles de dépose de couches d'une poudre métallique ou oxyde puis, au moyen d'un faisceau laser commandé en balayage le long desdites couches, de mise en fusion au moins partielle de la poudre de la dernière couche déposée avec les couches précédemment formées selon la géométrie de la pièce à fabriquer, jusqu'à un niveau affleurant la face supérieure d'une cavité destinée à recevoir ce corps étranger,
- interruption de la fabrication de cette pièce lorsque ce niveau est atteint, élimination de la poudre contenue dans la cavité et introduction du corps étranger dans cette cavité,
- reprise de la fabrication additive de la pièce jusqu'à ce qu'elle soit complète.

De manière préférée, ce procédé comporte en outre, entre l'étape d'introduction du corps étranger dans la cavité et l'étape de reprise de la fabrication additive par fusion laser, des étapes de :
- placement d'un plafond au-dessus de cette cavité en sorte que sa face supérieure affleure au moins approximativement la dernière couche de poudre déposée avant l'interruption de la fabrication,
- commande en balayage du faisceau sur le plafond et sur la dernière couche formée avant interruption en sorte d'assembler ce plafond à la partie de la pièce formée avant interruption.

De manière également avantageuse, après avoir introduit le corps étranger dans le corps, l'étape de reprise comporte des cycles de dépose de couche et de mise en fusion en sorte de compléter la cavité en en faisant converger les parois au-dessus du corps étranger.

Selon une autre caractéristique possible de l'invention, on forme deux cavités dans lesquelles on intègre deux corps.

Selon encore une autre caractéristique possible de l'invention, on forme une cavité dans laquelle on intègre un corps solide et un fluide.

L'invention couvre en outre une pièce obtenue par le procédé de l'invention, c'est-à-dire une pièce comportant au moins une cavité contenant au moins un corps étranger, solide, liquide ou pulvérulent, ce corps présentant une interface de reprise de fusion sélective par laser se prolongeant dans le corps jusqu'à la cavité.

Selon une caractéristique possible de l'invention, la cavité est délimitée par une portion comportant des parois convergeant l'une vers l'autre à partir de l'interface.

Selon une autre caractéristique possible de l'invention, la cavité est bordée par un plafond formé d'une pièce rapportée.

Selon encore une autre caractéristique possible de l'invention, la cavité est débouchante.

Selon une autre caractéristique possible de l'invention, le corps étranger est un aimant.

Selon une autre caractéristique possible de l'invention, la cavité communique avec l'extérieur et dont le corps est formé d'un matériau produisant une réaction chimique en contact avec un milieu déterminé.

Selon une autre caractéristique possible de l'invention, la cavité communique avec l'extérieur et dont le corps est formé d'un matériau soluble dans un liquide prédéterminé.

Selon une autre caractéristique possible de l'invention, la cavité est un canal contenant au moins une fibre optique.

Selon une autre caractéristique possible de l'invention, la pièce comporte plusieurs corps étrangers, pouvant être de natures différentes, solides, liquides, voire gazeux.

Les objets, caractéristiques et avantages de l'invention ressortent de la description qui suit, donnée à titre d'exemple illustratif non limitatif, en regard des dessins annexés sur lesquels :
- la figure 1 est une vue en perspective partielle d'une partie d'une pièce fabriquée de manière additive, avec un bord supérieur comportant un lamage de réception d'un plafond (non représenté),
- la figure 2 est une vue en perspective d'une pièce adaptée à recevoir un corps étranger constitué d'un aimant avant fermeture de la cavité de réception,
- la figure 3 est une vue analogue d'une pièce adaptée à recevoir un tel aimant, d'une manière lui permettant de glisser dans une direction,
- la figure 4 est une vue partielle en perspective d'une autre pièce, adaptée à recevoir un corps étranger constitué d'un aimant, dans une cavité entourée d'une masse à grande porosité, avant fermeture de cette cavité par un plafond,
- La figure 5 est une vue en perspective d'une pièce comportant une cavité débouchante destinée à recevoir une bille pouvant coulisser, avant fermeture de cette cavité
- La figure 6 est une vue en perspective en coupe de cette pièce,
- La figure 7 est une vue en perspective d'une autre pièce comportant une cavité débouchante destinée à recevoir une bille, connectée à une autre cavité destinée à contenir un fluide avant sa fermeture par un plafond,
- La figure 8 est une vue en perspective d'une coupe de la pièce de la figure 7,
- La figure 9 est une vue partielle en perspective d'une pièce comportant une cavité, au sein d'un coeur à forte porosité entouré d'une paroi munie de passages de mise en communication avec l'extérieur, destinée à recevoir un solide adapté à réagir avec de l'eau (liquide ou non), avant sa fermeture par un plafond,
- La figure 10 est une vue en perspective d'une pièce adaptée à recevoir un produit pulvérulent et dont la paroi comporte des passages de mise en communication avec l'extérieur, avant sa fermeture par un plafond,
- La figure 11 est une photographie d'une pièce complète contenant un aimant, à partir de la configuration de la figure 3,
- La figure 12 est une photographie d'une autre pièce complète, contenant également un aimant,
- La figure 13 est une photographie d'une autre pièce complète, contenant une bille et une huile, à partir de la configuration des figures 7 et 8,
- La figure 14 est une photographie d'une autre pièce complète, contenant un solide effervescent, après fermeture à partir de la configuration de la figure 9,
- La figure 15 est une photographie d'une autre pièce complète, contenant une poudre, après fermeture à partir de la configuration de la figure 10,
- La figure 16 est une photographie d'une autre pièce complète, contenant également une poudre, après fermeture à partir de la configuration de la même figure 10
- La figure 17 est un schéma montrant une variante de réalisation d'une pièce conforme à l'invention, mettant en oeuvre un plafond d'épaisseur variable, ici bombé vers l'intérieur de la cavité,
- La figure 18 est un schéma montrant la fermeture d'une cavité lors d'une reprise de fabrication, en l'absence d'un tel plafond,
- La figure 19 est une vue schématique en perspective d'encore un autre corps adapté à contenir des fibres optiques,
- La figure 20 est une photographie prise de dessus d'un corps conforme à la géométrie de la figure 19, et
- La figure 21 est une vue schématique d'encore un autre corps adapté à contenir des fibres, avec une géométrie permettant de provoquer une rupture de telles fibres en cas de choc ou de déformation importante.

Ces figures représentent des pièces fabriquées par la technique de fabrication additive appelée « fusion sélective par laser » ou SLM, impliquant le dépôt de couches successives de poudres métalliques ou céramiques dont des parties sont temporairement et de manière sélective mises en fusion par faisceau laser, avec une interruption en cours de fabrication pour introduire au moins un corps étranger dans une (ou plusieurs) cavité formée préalablement à cette interruption, avant de reprendre cette fabrication additive jusqu'à l'obtention de la totalité de la pièce, en minimisant la détectabilité (à l'oeil nu) de la frontière ou interface entre les parties de la pièce formées avant et après, respectivement, ladite interruption.

Dans la suite, des acronymes sont utilisés dont, notamment :
- LBM pour l'expression anglaise « laser beam melting » ou fusion de poudre métallique par laser, qui est un procédé de fabrication additive bien maitrisé,
- RP pour la notion de reprise de production directe (sans utilisation de plafond), dans le cadre d'une étape de fabrication additive interrompue puis reprise après un certain temps,
- SP pour la notion de supportage par plafond pour une reprise de production après ajout d'un tel plafond au-dessus d'une cavité, afin d'éviter, après cette reprise, l'introduction de poudre dans cette cavité.

Ces notions de reprise de production (RP) et de supportage par plafond (SP) sont deux méthodes envisagées pour répondre à la principale problématique qui apparaît lorsqu'on veut insérer un ou plusieurs composants dans une pièce en cours de fabrication en LBM, à savoir la reprise de la fabrication de la pièce après l'insertion du corps étranger.

Plus précisément, la Reprise de Production consiste à arrêter la fabrication, à aspirer la poudre dans la cavité, à insérer le corps étranger, puis à remplir à nouveau de poudre la cavité (dans le volume résiduel situé entre le corps étranger et la paroi de la cavité), à refaire l'horizontalité de la couche de poudre (passage du racleur couramment utilisé dans la fusion par laser après la dépose de chacune des couches de poudre), et à continuer la fabrication. Cette approche revient à bloquer en position le corps étranger, par de la poudre qui reste en pratique pulvérulente puisqu'elle n'est pas mise en fusion comme le reste de la pièce ; lors de la mise en fusion des couches ultérieures, on prolonge la cavité vers le haut en en faisant converger les surfaces latérales jusqu'à couvrir complètement le corps étranger.

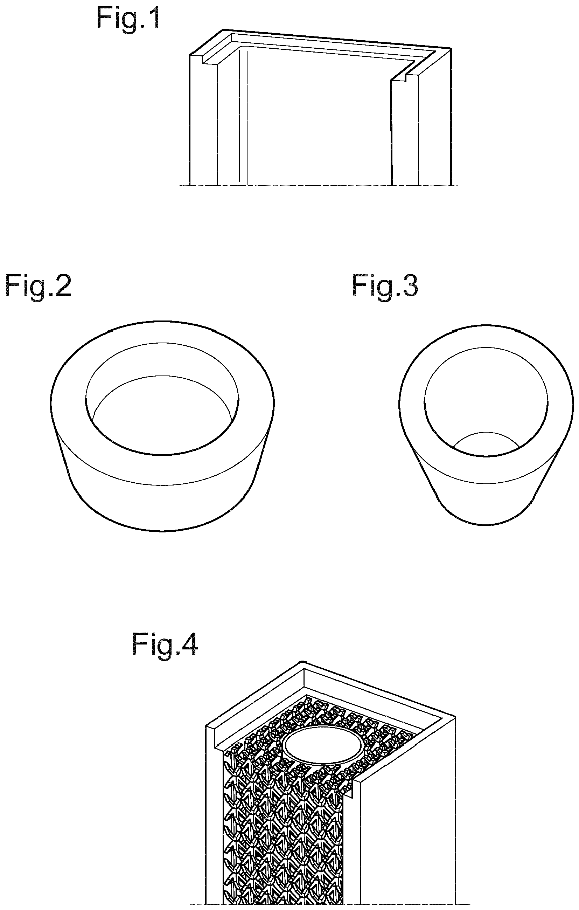

Le Supportage par Plafond comporte les trois mêmes premières étapes (arrêt, aspiration, insertion). Par contre, après l'insertion et avant que de la poudre puisse pénétrer dans la cavité, cette dernière est obturée par un plafond (c'est-à-dire une plaque de couverture, d'épaisseur appropriée, obturant la cavité par le dessus) positionné au niveau où la fabrication a été interrompue. Ce plafond a pour effet de supporter la poudre déposée après la reprise pour fabriquer les couches suivantes sans que celle-ci puisse venir en contact avec le corps étranger. Une manière, le cas échéant, d'éviter le déplacement horizontal du plafond (lors du passage du racleur notamment), est de prévoir des épaulements (ou rebords) prévus à la périphérie de l'ouverture supérieure de la cavité lors de la conception de la pièce et fabriqués avant l'arrêt de production (voir figure 1).

De préférence un tel plafond est positionné de manière à ce que sa surface supérieure soit, autant que possible, au même niveau que la dernière couche imprimée, ce qui peut être favorisé par la présence de tels épaulements.

Les plafonds sont fabriqués indépendamment de la pièce, dans une production différente. La forme de ces plafonds est avantageusement choisie en fonction de la forme de la section de la cavité à obturer, voire en fonction de la forme générale de la pièce en cours de fabrication ; ainsi, à titre d'exemple, ces plafonds sont rectangulaires, polygonaux avec par exemple six côtés, voire circulaires (en forme de disques).

De manière avantageuse, dans le cas où les plafonds sont réalisés par fabrication additive, ils sont fabriqués verticalement (afin de minimiser la quantité de supports, et d'avoir des écarts dimensionnels minimaux) ; il est avantageux qu'ils soient en même matériau que le reste du corps ; toutefois, il suffit que le plafond et le corps soient en matériaux compatibles avec la fonction du corps final.

Après l'arrêt de production et la mise en place du corps étranger, l'assemblage du plafond à la partie du corps déjà formée peut se faire de trois manières principales :
- Le Lasage (en abrégé « L »)
- L'Encapsulage (en abrégé « E »)
- La combinaison des deux : Lasage puis Encapsulage (en abrégé « LE »)

Dans le présent contexte, le lasage consiste à venir balayer par le faisceau laser l'interface entre le plafond et la pièce en cours de fabrication, au niveau de la dernière couche réalisée avant l'arrêt de production. Ce balayage peut être effectué plusieurs fois. La surface balayée doit couvrir à la fois, au moins, la périphérie du plafond, l'interstice entre la pièce et le plafond, et une portion de la pièce déjà fabriquée qui entoure la cavité, afin de souder efficacement le plafond à la pièce.

Dans le présent contexte, l'encapsulage consiste à déposer des couches au-dessus du plafond et de la dernière couche de la pièce formée avant l'arrêt de production et de les assembler à la partie de la pièce formée avant ledit arrêt, ce qui revient à noyer ce plafond dans la pièce ; c'est une manière particulièrement efficace de maintenir ce plafond en place ; en outre, cette méthode permet de recouvrir intégralement le plafond afin de cacher sa présence. Toutefois, en variante, on peut ne recouvrir que la périphérie du plafond, pour en assurer un blocage perpendiculairement à lui-même, tout en conservant la visibilité de ce plafond (il y a des cas, où on peut souhaiter avoir accès à la surface d'un tel plafond).

La combinaison du lasage et de l'encapsulage consiste, comme son nom l'indique, à d'abord exécuter un lasage du plafond afin de le souder à la pièce déjà imprimée, puis à construire par fabrication additive au-dessus du plafond et de la dernière couche formée avant l'arrêt de la production.

On comprend que, pour qu'un lasage puisse être mis en oeuvre, les matériaux constitutifs du plafond et d'au moins la portion de la pièce entourant la cavité doivent être soudables ; cela n'est pas nécessaire dans les autres cas.

Il est à noter que, dans le cas d'un lasage, deux étapes différentes de fabrication doivent être programmées en CAO (« conception assistée par ordinateur ») : une première étape pour la partie avant arrêt de production de la pièce, et une seconde étape pour le lasage. En effet, l'exécution d'un lasage s'applique à la dernière couche de la partie basse. Pour l'encapsulage, cette deuxième étape de programmation en CAO n'est pas nécessaire car la partie haute de la pièce (après arrêt de production) n'est que la continuation de la partie basse. Ainsi, avec une seule étape de programmation en CAO, l'arrêt de production peut être plus facilement géré, lors des étapes de modélisation CAO, de supportage et de transfert machine.

Un des avantages du supportage par plafonds est, comme indiqué ci-dessus, qu'il n'y a pas d'introduction de poudre dans la cavité après la mise en place du corps étranger et la reprise de production. Cela permet également d'isoler le corps étranger vis-à-vis des effets thermiques impliqués par la fabrication de la seconde partie de la pièce. En effet, dans le cas de la simple reprise de production (donc sans plafond), le composant reste proche de la zone où recommence la fabrication additive, au travers de la poudre (qui, même lorsqu'elle forme encore une masse fortement poreuse, peut conduire jusqu'à environ 100 fois mieux la chaleur que l'air), et sa température peut alors augmenter rapidement (la température au point de contact du laser est supérieure à 1300°C dans le cas d'une poudre d'alliage nickel-chrome avec des additions de molybdène et de niobium appelée Inconel ® 625).

Le Tableau 1 suivant récapitule les avantages et inconvénients des différentes méthodes pour continuer la production après l'insertion d'un corps étranger :

| **Méthode** | | **Acronyme** | **Dépoudrage** | **Nombre de CAO** | **Ligne d'arrêt de production** | **Visibilité** |
|---|---|---|---|---|---|---|
| Reprise de Production | | RP | Oui | 1 | Oui | Non |
| Supportage par Plafonds | Lasage seul, puis arrêt | SP - L | Oui | 2 | Oui | Plafond |
| | Encapsulage | SP - E | Oui | 1 | Oui | Non |
| | Lasage et Encapsulage | SP - LE | Oui | 2 | Oui | Non |

La colonne « ligne d'arrêt de production » a pour objet d'indiquer si un relief en forme de ligne est visible sur la surface extérieure du composant, à la hauteur de la couche pendant laquelle a eu lieu l'interruption de fabrication. Cette ligne est due aux phénomènes métallurgiques en jeu lors du cycle mise en fusion, refroidissement, remise en fusion. Cette marque visuelle étant liée au procédé de fabrication en lui-même, il est impossible qu'elle n'apparaisse pas (surtout si l'on utilise une technique d'observation à fort grossissement). Par contre, elle peut être aisément éliminée lors des étapes de parachèvements (polissage...). A titre d'exemple, ce critère peut s'évaluer selon que le relief est visible à l'oeil nu, ou non (on comprend que, plus on utilise une technique d'observation performante, plus le parachèvement doit être fin).

La colonne « visibilité » a pour objet d'indiquer si, oui ou non, le fait qu'un corps étranger a été intégré est facilement détectable à l'oeil sur la pièce finale; la réponse est « non » sauf dans le cas d'un lasage seul, donc non suivi d'une reprise de fabrication additive car alors le plafond obstruant la cavité est visible ; en d'autres termes, on ne détecte pas facilement qu'un objet étranger a été intégré dans la pièce dès lors que, conformément à l'invention, la fabrication additive a repris après la mise en place du corps étranger.

Lors de la seconde phase de fabrication additive, il peut y avoir une interaction entre le corps étranger et la poudre mise en oeuvre pour cette seconde phase ; en effet, dès lors que la cavité est en communication avec l'extérieur, par des orifices éventuellement très fins, il existe une possibilité que de la poudre entre en contact avec le corps étranger, ou que le corps étranger vienne à diffuser hors de la pièce (notamment lorsque le corps étranger est un fluide ou une poudre). Il en découle que la partie de la poudre qui, après la reprise de fabrication, est déposée sans être mise en en fusion (parce qu'elle est en dehors du contour de la pièce à réaliser) peut être contaminée par le corps étranger.

Lorsqu'il est jugé qu'existe un tel risque de contamination, la fabrication additive de la pièce est avantageusement accompagnée de la formation par fabrication additive d'une paroi de confinement à contour fermé, entourant cette pièce au plus près sur toute sa hauteur. Ainsi, lors du dépoudrage intervenant en fin de fabrication de la pièce, seule la partie de la poudre située entre cette paroi de confinement et la pièce pourra avoir été contaminée, tandis qu'on aura toute garantie que la poudre située entre les parois de confinement de plusieurs pièces fabriquées simultanément n'a, elle, subi aucune contamination et pourra être utilisée sans risque pour la fabrication de nouvelles pièces. Pour profiter de cette dissociation, il faut bien entendu utiliser des aspirateurs différents pour aspirer la poudre située à l'intérieur de ces parois de confinement et à l'extérieur de celles-ci.

Divers essais ont été effectués pour valider la possibilité d'intégrer des corps étrangers aussi bien solides, que fluides (des liquides plus ou moins visqueux), pulvérulents ou fibreux ou filaires (fibres optiques par exemple, dans une pièce fabriquée par fusion laser, tout en conservant une grande variété de propriétés possibles pour ces corps étrangers.

Ces essais ont été conduits en utilisant une poudre métallique, ce qui conduit à des températures bien plus élevées qu'avec des matières synthétiques. Il s'est agi d'Inconel® 625, mis en oeuvre par couches élémentaires de 40µm à l'aide d'une Machine EOS 270 agissant par fusion par laser (LBM) ; la fabrication a été conduite selon le lot de paramètres appelé « EOS Speed ».

Les dimensions des plafonds ont été de :
- 20 mm x 20 mm, avec une épaisseur de 2 mm, dans le cas d'Inconel ® 625,
- Ou de 20 mm x 16.5 mm, avec une épaisseur de 0.4 mm (avec des dimensions de 20 mm x 20 mm et une épaisseur de 0.4 mm, on a constaté une déformation sensible de ces plafonds, conduisant à un gauchissement significatif, provenant des contraintes internes dues au procédé),
- Ou des plafonds en acier inoxydable avec une épaisseur de 0,5 mm en acier (ce matériau est moins sensible à la chaleur que l'aluminium ce qui permet d'éviter les déformations de ce même plafond).

Pour les essais réalisés avec des plafonds fabriqués par fusion par laser, les plafonds ont été préparés verticalement par lots, dans les mêmes conditions que l'arrêt de production présentées plus haut, par lot de 20 pour ceux de 0.4mm d'épaisseur et par lot de 5 pour ceux de 2 mm d'épais. Pour les essais d'inclusion de fibre optique, les plafonds ont été découpés dans des plaques d'acier pré existantes.

Les cavités ont en conséquence été conçues pour avoir une ouverture pouvant être obturée par de tels plafonds.

Lorsqu'un lasage a été mis en oeuvre, il a été réalisé deux fois, au moyen de tirs laser uniques (balayage sans dépôt de poudre).

Les corps étrangers utilisés pour ces essais ont été choisis afin d'avoir une bonne résistance à la température ; en effet, comme cela a été évoqué précédemment, le laser délivrant une puissance suffisamment importante pour faire fondre le matériau, la diffusion thermique au travers de la poudre et de la matière solidifiée vient faire chauffer le corps étranger inséré.

En tant que corps étranger solide, on a choisi :
* un aimant en néodyme, de 8 mm de diamètre sur 3 mm de hauteur, étant rappelé qu'on lit dans la littérature technique que des aimants au néodyme perdent une fraction importante de leur magnétisation, de façon permanente, à partir de 80°C),
* des billes en acier (de 5.9 mm de diamètre), que l'on peut vouloir coopérer avec une huile pour rouler sur une surface ou pour appliquer une telle huile sur cette surface,
* des composés effervescents, c'est-à-dire des composés réagissant avec de l'eau ou un autre liquide, pour libérer des éléments actifs (il s'est agi d'un médicament contenant du paracétamol ; plus précisément, un quart d'une pastille de 23 mm de diamètre par 6.5 mm de hauteur).
* des fibres optiques, c'est-à-dire des brins capables de conduire des flux de données et de lumière expérimentée. Il s'est agi de fibres gainées d'une matière plastique résistant à la chaleur (poly-tetra-fluoro-éthylène, ou PTFE) en 2 longueurs différentes et deux diamètres différents : 0,8 mm et 2,2mm.

En tant que corps fluide, on a choisi une huile de silicone, qui est un liquide ayant un point d'ébullition élevé (supérieur à 250°C), utilisé en chimie, pour des expériences impliquant des températures importantes ; ce liquide, incolore, a été mélangé à des pigments sous forme de poudre (environ 100 mm³ de poudre pour 1 cm³ d'huile) afin de lui donner une couleur rouge et d'en permettre la détection visuelle.

En tant que produit pulvérulent, on a choisi du sulfate de cuivre anhydre (environ 200 mm³ de poudre par cavité), qui est un composé blanc sous forme anhydre mais qui bleuit en présence d'H2O.

Les corps introduits et les paramètres opératoires utilisés pour conduire ces essais sont reportés dans le tableau ci-dessous où :
- « e » est l'épaisseur du plafond utilisé (0.4 mm ou 2 mm) en cas de lasage,
- « a » est le jeu horizontal entre les rebords de la première partie de la pièce (avant l'arrêt de production) et le plafond (0.2 mm ou 1 mm de chaque côté),
- « c » est l'épaisseur de la partie de la pièce produite après reprise de la fabrication (0.4 mm, soit 10 couches successives).

| **Méthode** | | **Nombre d'essais** | **Corps étranger inséré** | **e** | **a** | **c** | **Décollement** | **Numéro d'essai** |
|---|---|---|---|---|---|---|---|---|
| Reprise de Production | | 2 | Aimant | | | | | 1-2 |
| | | 2 | Bille | | | | | 3-4 |
| | | 2 | Fibre optique | | | | | |
| Supportage par Plafonds | Lasage - L | 4 | Bille et Liquide | 0,4 | 0,2 | 0,0 | Non | 5 |
| | | | Sulfate | 0,4 | 1,0 | 0,0 | Léger | 6 |
| | | | | 2,0 | 0,2 | 0,0 | Oui | 7 |
| | | | Pastille | 2,0 | 1,0 | 0,0 | Léger | 8 |
| | Encapsulage - E | 2 | Sulfate | 0,4 | 0,2 | 0,4 | Encapsulage | 9 |
| | | | Aimant | 0,4 | 1,0 | 0,4 | Non | 10 |
| | Lasage et Encapsulage - LE | 2 | Aimant | 0,4 | 0,2 | 0,4 | Non | 11 |
| | | | | 2,0 | 0,2 | 0,4 | Non | 12 |
| | | 2 | Fibre optique | | | | Léger | |

L'insertion de corps étrangers pendant la fabrication doit être prévue en amont, lors de l'étape de conception. Ainsi, des cavités doivent être prévues afin d'accueillir le corps ; des dimensions ou des géométries spécifiques (portions de forte porosité ayant la forme de treillis) peuvent être ajoutées en fonction des contraintes techniques appliquées (chaleur de la fusion par exemple). Les figures 2 à 10 présentent des caractéristiques de différents objets conçus.

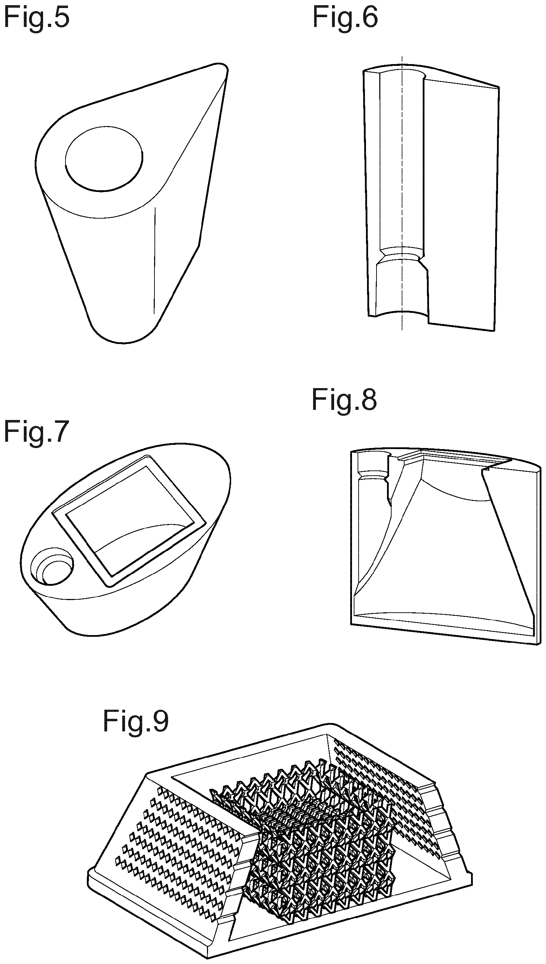

Bien que chaque objet soit représenté le plus souvent avec un seul corps étranger (à l'exception des figures 7, 8 et 13), il doit être compris qu'une même pièce peut contenir un nombre quelconque de corps étrangers, à choisir en fonction de l'application industrielle envisagée.

S'agissant du cas des figures 7, 8 et 13, il faut noter qu'il correspond à un cas où plusieurs corps étrangers coopèrent.

Il mérite d'être souligné que les essais décrits n'aboutissent pas à des pièces complètes au sens de l'invention (la seconde partie de la pièce n'est généralement qu'à peine abordée), mais visent à établir la faisabilité technique de l'invention, par simple continuation de la fabrication additive.

Les géométries modélisées pour ces essais sont simples et ne présentent pas de fonctions particulières mais l'insertion des corps étrangers montrés est tout à fait transposable à d'autres géométries plus proches des besoins pouvant apparaître dans la pratique industrielle, notamment dans les secteurs de l'aéronautique, du spatial, du médical, de la robotique, de l'automobile et des transports, de la maintenance et du montage.

On peut imaginer diverses applications possibles, selon les propriétés physiques apportées par les corps étrangers.

Par exemple, des fibres optiques incluses dans deux pièces destinées à être assemblées très précisément peuvent permettre d'en contrôler le bon alignement. En effet, l'absence de point lumineux visible à l'extrémité des fibres opposées à la source révèlerait un mauvais alignement. L'absence de point lumineux visible pourrait aussi révéler un défaut de planéité ou une pièce endommagée par un choc ou un écrasement durant sa durée de vie. L'inclusion de fibres optiques présente un fort potentiel pour l'industrie.

Le sulfate de cuivre anhydre enfermé dans une cavité peut être utilisé comme témoin pour une pièce qui ne doit pas être exposée à H2O sous peine d'être endommagée par exemple. Si, par un contrôle visuel, l'opérateur constate que le sulfate est bleu, il peut retirer la pièce du circuit.

Un aimant inclus dans une pièce pourrait permettre d'assembler temporairement (sous l'effet d'un champ magnétique pouvant être généré ou au contraire supprimé) deux pièces aux géométries complexes.

Un liquide coloré inclus dans des pièces avec une bille à positionner en bout d'aubes de turbines comme autant de « cartouches » pourrait aider à contrôler leur alignement. En effet, en faisant tourner les aubes, les cartouches devraient laisser une trace colorée uniforme. Si celles-ci ne sont pas correctement alignées, les traces seraient multiples et désordonnées. Un médicament effervescent pourrait être inclus dans une prothèse médicale. Ainsi, la juste dose serait délivrée en une fois, au plus près de la zone à traiter et directement grâce à la pose de la prothèse, sans administration supplémentaire. Un tel médicament pourrait agir comme anti-rejet ou anesthésiant par exemple.

Il est à noter que les divers secteurs industriels d'applications possibles sont régis par des normes et des procédures de qualification spécifiques à chacun. En ce sens, les deux stratégies mentionnées (reprise sans plafond et après pose d'un plafond) comportent toutes deux des avantages et des inconvénients plus ou moins impactants selon le secteur d'application.

| Avec plafond | | Sans plafond | |
|---|---|---|---|
| Pas de poudre non fusionnée dans les cavités (important pour le médical par exemple) | La présence du plafond pourrait peut-être altérer l'homogénéité de la résistance mécanique de la pièce | Présence de poudre non fusionnée dans les cavités (ajout de masse non souhaité dans le spatial) | La pièce reste homogène |

La configuration des figures 2 à 4 visait à valider que, par application de l'invention, un corps étranger ayant initialement une aimantation ne perd pas ses propriétés même s'il est très proche de l'impact du faisceau laser lors de la seconde phase de fabrication, au moins lors du lasage et/ou de l'encapsulation :
- La figure 3 visait à contenir un aimant similaire à celui de la figure 2 (les deux pièces ont un fond de 2 mm d'épaisseur), au sein d'une cavité dans laquelle l'aimant peut se déplacer en translation (sa longueur est de 23 mm), ce qui permet de valider en outre que les propriétés de l'aimant sont encore moins affectées lorsque l'aimant est plus éloigné de l'impact du laser que dans le cas de la figure 2.
- La figure 4 visait à contenir un aimant similaire à celui des figures 2 et 3, au sein d'une cavité allongée verticalement (comme dans la figure 3), entourée d'un coeur à forte porosité constitué d'un treillis.

La configuration des figures 5 et 6 visait à valider qu'on peut intégrer une bille dans une cavité d'une pièce obtenue par fabrication additive tout en laissant subsister un jeu de glissement contrôlé.

La configuration des figures 7 et 8 visait à valider qu'on peut intégrer, dans une telle pièce obtenue par fabrication additive du type fusion laser, non seulement une bille dont on souhaite qu'elle puisse glisser et rouler sur elle-même, mais aussi un fluide, ici un fluide de lubrification, de même que, à l'inverse, on peut utiliser une telle bille pour appliquer sur une surface un fluide dont cette bille est enduite ; le fluide est ici une huile de silicone.

La configuration de la figure 9 visait à valider qu'on peut intégrer, dans une pièce obtenue par fabrication additive, un corps destiné à réagir à un fluide extérieur entrant dans cette pièce au travers de passages ménagés dans la paroi de ce corps pour qu'un principe actif ainsi libéré de ce solide puisse diffuser vers l'extérieur de la pièce ; le coeur constitué d'un treillis que comporte cette pièce a d'une part l'avantage de faciliter la circulation du fluide extérieur vers le corps précité, mais aussi l'avantage d'assurer une isolation thermique du solide vis-à-vis des impacts du faisceau laser. La paroi est munie d'un réseau d'orifices ici constitués de carrés d'un millimètre de côté.

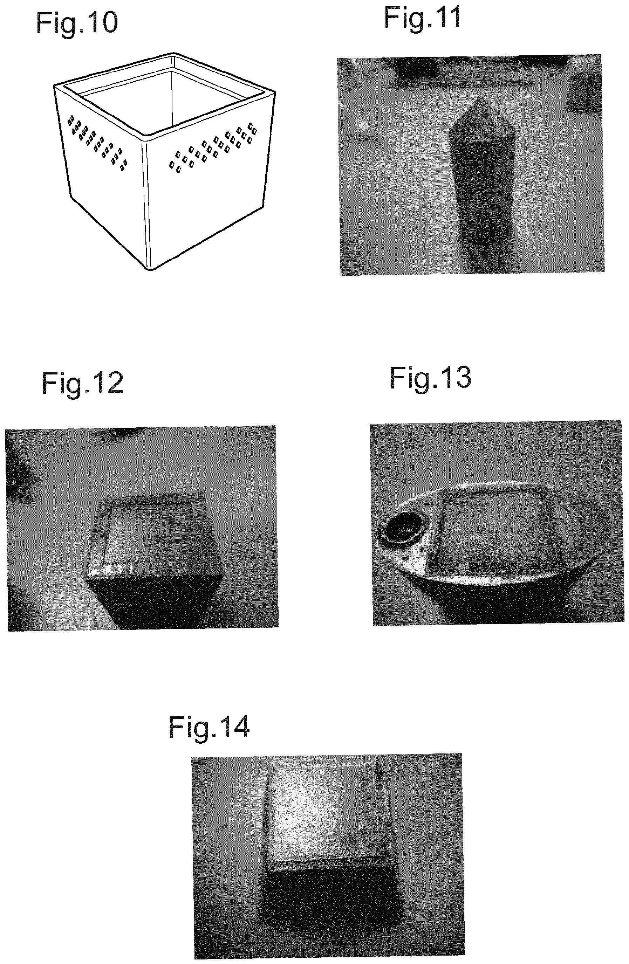

La configuration de la figure 10 visait à valider qu'on peut intégrer, dans une pièce obtenue par fabrication additive, un composant pulvérulent, d'une manière telle que ce composant reste dans la pièce tant qu'on le souhaite, mais peut aussi, en temps utile, s'écouler en dehors de la pièce, avec ou sans réaction avec un fluide provenant de l'extérieur au moyen de passages de communication similaires à ceux de la figure 9 (ici des carrés de 0.6 mm de côté devant laisser entrer de l'eau pour réagir avec du sulfate de cuivre anhydre et sortir du sulfate ainsi libéré. Ces perçages sont situés en partie haute des cubes afin d'éviter de contaminer la poudre de fabrication (le restant étant réutilisé).

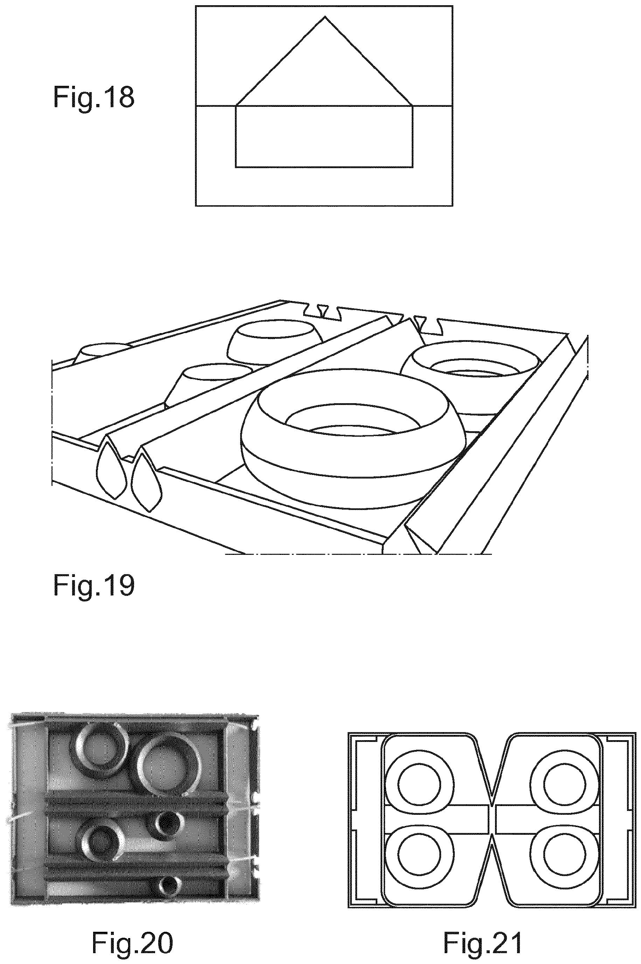

La configuration de la figure 19 visait à valider qu'on peut intégrer, dans une pièce obtenue par fabrication additive au sens de l'invention, une ou plusieurs fibres dont les extrémités sont libres, sans que la reprise de la pièce après l'introduction des fibres en détériore l'intégrité ; à la différence des pièces précédentes, celle de la figure 19 ne comporte que les parois nécessaires pour définir les canaux contenant les fibres ; ces canaux comportent des boucles de diamètres différents, pour tester en outre l'intégrité de fibres qu'on a introduites après les avoir coudées ; enfin, la configuration de la figure 21 visait à valider que, en intégrant des fibres entourées de matériau sur toute leur longueur à l'intérieur du corps, sauf en un endroit en regard duquel ce corps comporte une ou plusieurs pointes, il est possible de détecter, par vérification de l'intégrité de ces fibres, que le corps n'a pas subi de choc ou de déformation dépassant un seuil prédéterminé.

Les figures 11 à 15 représentent certains des objets résultant des essais décrits ci-dessus. Il faut noter que chacun d'entre eux contient le corps étranger qu'on a cherché à y enfermer, ce qui valide le principe de l'invention.

Les pièces des figures 11 et 12 contiennent ainsi chacun un aimant, dont on a pu vérifier qu'il avait conservé ses propriétés magnétiques. Il a toutefois été constaté que, lorsque la cavité dans laquelle l'aimant est intégré n'est reliée à la paroi extérieur que par une quantité infime de matière (une simple connexion de la cavité à la paroi limitée à quelques point de contact, le reste de la cavité étant entouré d'air), les propriétés d'aimantation ne peuvent plus être vérifiées ; cela semble devoir être attribué à la distance existant entre l'aimant et cette paroi extérieure qui était de 7 mm ; on peut en outre supposer que des zones de poudre non fusionnée (ce qui est difficile à éviter dans le fond de la cavité, notamment) tendent à réduire la détection des propriétés d'aimantation. Par contre, il semble que, dès lors qu'il y a une continuité substantielle de matière entre la cavité et la paroi, même limitée au treillis représenté à la figure 4, l'aimantation continue à être vérifiable (au moins vis-à-vis d'une poudre) ; il semble établi que la mise en oeuvre d'étapes de lasage ou d'encapsulage ne conduit pas à la suppression pure et simple des propriétés magnétiques des aimants.

Dans une pièce conforme aux figures 5 et 6, ou le diamètre est réduit progressivement à l'approche de l'embouchure de la cavité, on a pu constater que la bille d'acier reste incluse dans la pièce sans pouvoir être retirée, sans toutefois que cette bille ait perdu de sa liberté de mouvement dans la cavité débouchante (la bille n'a donc pas fusionné avec la poudre lors de la fabrication de la pièce et son état de surface n'a pas non plus été altéré ; cela a pu être vérifié au moyen d'un aimant qu'on a fait bouger le long de la paroi de la pièce, parallèlement à la dimension longitudinale de la cavité).

La pièce de la figure 13 a permis de valider qu'on peut intégrer simultanément de l'huile de silicone et une bille d'acier dont le canal communique avec le réservoir d'huile de silicone ; on a ainsi pu vérifier que la bille est libre de tourner et que l'huile a donc conservé sa fluidité et sa capacité de lubrification d'origine, mais aussi que la pièce libère de l'huile sur une surface sur laquelle on fait rouler la bille.

En plongeant la pièce de la figure 14 dans de l'eau, on a pu vérifier que la pastille effervescente réagissait efficacement avec l'eau, même si les bulles dues à l'effervescence se mélangeaient aux bulles provenant de l'échappement de l'air piégé dans la pièce lors de l'introduction dans l'eau (on peut reconnaître les bulles d'effervescence au fait qu'elles sont fines, serrées et qu'elles libèrent un composé troublant l'eau).

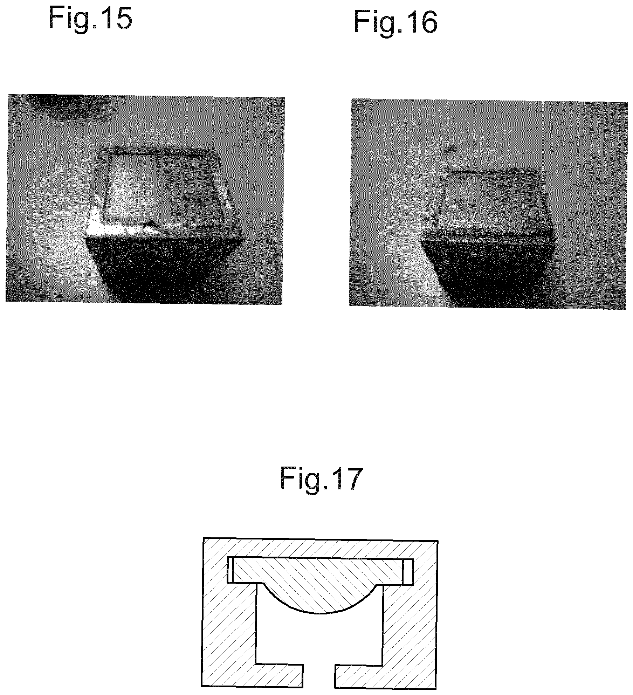

Les pièces des figures 15 et 16 ont permis de vérifier que la poudre de sulfate de cuivre anhydre avait conservé son caractère pulvérulent ; ainsi, en renversant la pièce, en sorte de permettre à la poudre de s'écouler par les passages formés en partie supérieure de la paroi, on a pu vérifier que la poudre était bien restée à l'état de poudre.

Lorsqu'on plonge les pièces des figures 15 et 16 dans de l'eau, on n'observe rien pendant plusieurs secondes puis, après de l'ordre d'une quinzaine de secondes, on a commencé à détecter un bleuissement de l'eau, impliquant que la poudre avait pu réagir avec l'eau et avait bien conservé ses propriétés d'origine (le bleuissement s'est renforcé au cours des secondes et minutes suivantes).

Lorsqu'on dispose une source lumineuse (ici une série de diodes électroluminescentes (LED en abrégé)) d'un côté d'une pièce conforme à la figure 20 en regard des extrémités des fibres optiques, on observe que le flux lumineux est transmis (un point lumineux est visible à l'autre extrémité des fibres optiques), malgré la courbure parfois importante imposée aux fibres.

On peut noter qu'on peut reconnaître une pièce obtenue par le procédé de l'invention par le fait qu'elle comporte au moins une cavité contenant un corps étranger, ce corps présentant une interface de reprise de fusion sélective par laser se prolongeant dans le corps jusqu'à la cavité ; une telle caractérisation se fait par simple observation métallographique d'une coupe de cette pièce.

Lorsqu'on observe les pièces obtenues, on constate que les surfaces résultant d'une encapsulation (avec, comme indiqué ci-dessous, la formation d'une dizaine de couches au-dessus du plafond), ont un aspect bien plus régulier que celles résultant d'un simple lasage. Cela ressort notamment de la comparaison des figures 15 (après lasage) et 16 ; en fait cela semble être dû au fait que, le lasage effectué ayant comporté deux balayages de la zone à laser (sans dépôt de poudre), l'énergie thermique ainsi apportée par le faisceau laser a provoqué une déformation du plafond, lequel a eu tendance à se soulever. Par contre, en cas de simple encapsulation, aucun problème d'étanchéité ou de jeu entre le plafond et le reste de la pièce n'a été à déplorer.

Il semble, sous toutes réserves, qu'on puisse faire les remarques suivantes :
- Plus le jeu horizontal entre le plafond et l'objet est petit, plus le lasage se fait bien (le phénomène de « peluches » dues à de la poudre partiellement fusionnée semble alors minime, et cela semble permettre de minimiser le soulèvement du plafond).
- Il ne semble pas gênant que, au moment de la reprise de la production après mise en place d'un plafond, le racleur puisse venir en pratique pousser le plafond contre les rebords (en annulant le jeu d'un côté, en l'augmentant du côté opposé) ; il suffit d'en tenir compte pour le choix du jeu horizontal précité.
- les essais ont été faits de manière manuelle, l'arrêt de production ayant été déclenché par l'opérateur ; rien ne semble toutefois empêcher que la procédure puisse être automatisée, y compris l'aspiration de la poudre dans la cavité et la mise en place du corps étranger, solide ou liquide.
- L'aspiration de la poudre dans les cavités ne pose pas de problème particulier dès lors que la taille de l'embout d'aspiration est compatible avec la taille et la forme de la cavité (ou des cavités lorsqu'il y en a plusieurs).

On comprend que la technique de supportage par plafond offre de nombreuses possibilités, notamment :
- Utilisation de plafonds dont la face inférieure (face non lasée) possède une surface pouvant avoir une grande variété de géométries particulières (courbe complexe, face convexe ou concave,) - voir la figure 17 -. Ce plafond pourrait être réalisé en fabrication additive, ou avec un autre procédé (usinage, fonderie, découpe de plaque...),
- Utilisation de plafonds réalisés en un matériau différent de celui du reste de la pièce, ce qui peut permettre de combiner des propriétés de chacun des matériaux. On peut ainsi penser, notamment, à un plafond en un matériau soluble à la chaleur qui se désagrège avec la reprise de fabrication sans endommager le corps étranger, ou encore à un plafond transparent qui permet de contrôler le comportement du corps étranger, ou encore un plafond amagnétique permettant de détecter le champ magnétique émis par le corps étranger, par exemple.

Il est important de noter que les essais commentés ci-dessus concernent des corps étrangers de type solide ou liquide, mais qu'ils permettent de conclure qu'il est possible d'intégrer, grâce aux techniques de supportage par plafond ou de reprise de production, un (ou des) corps de type gazeux, par exemple de l'hélium ou de l'argon, seul (en choisissant la nature de l'atmosphère au moment de refermer la cavité) ou encapsulé dans un solide amené à libérer, postérieurement à la reprise de production, le gaz contenu, par exemple lorsque ce solide est rompu par un choc, ou dissous, ou absorbé, vaporisé ou fondu etc.

On appréciera qu'il ressort de la description qui précède que :
- Il est possible de se dispenser d'un plafond sous réserve que, lors de la reprise de la fabrication, on prolonge la cavité vers le haut en faisant converger les surfaces la définissant jusqu'à couvrir ledit corps - voir la figure 18.
- Il a été validé que l'intégration de 6 exemples de corps étrangers bien différents (aimant, sulfate de cuivre anhydre, pastille effervescente, huile de silicone et bille d'acier, fibres optiques) peut être mise en oeuvre tout en conservant les propriétés physiques de ces corps étrangers,
- Il a même été possible d'intégrer ces 6 types de corps étrangers lors d'une même étape de production par fabrication additive,
- L'invention peut être mise en oeuvre avec une poudre métallique d'alliage de type Inconel ® 625,
- Des murs de confinement peuvent être construits, au cours de la même fabrication additive, autour des pièces devant contenir des corps étrangers, de manière à réduire la masse de poudre susceptible d'être contaminée par les corps étrangers,
- Les commentaires formulés à propos des divers exemples ne dépendant en rien des matériaux utilisés ou des gammes dimensionnelles choisies, on peut soutenir que le procédé décrit s'applique à une grande variété de matériaux métalliques ou oxydes, voire à des liquides ou même à des gaz.

## Revendications

1. Procédé d'intégration d'un corps étranger au sein d'une pièce, comportant des étapes de :
- obtention dudit corps étranger,
- fabrication partielle de la pièce de manière additive par fusion laser, par cycles de dépose de couches d'une poudre métallique ou oxyde puis, au moyen d'un faisceau laser commandé en balayage le long desdites couches, de mise en fusion au moins partielle de la poudre de la dernière couche déposée avec les couches précédemment formées selon la géométrie de la pièce à fabriquer, jusqu'à un niveau affleurant la face supérieure d'une cavité destinée à recevoir ce corps étranger,
- interruption de la fabrication de cette pièce lorsque ce niveau est atteint, élimination de la poudre contenue dans la cavité et introduction du corps étranger dans cette cavité,
- reprise de la fabrication additive de la pièce jusqu'à ce qu'elle soit complète.

2. Procédé selon la revendication 1, comportant en outre, entre l'étape d'introduction du corps étranger dans la cavité et l'étape de reprise de la fabrication additive par fusion laser, des étapes de :
- placement d'un plafond au-dessus de cette cavité en sorte que sa face supérieure affleure au moins approximativement la dernière couche de poudre déposée avant l'interruption de la fabrication,
- commande en balayage du faisceau sur le plafond et sur la dernière couche formée avant interruption en sorte d'assembler ce plafond à la partie de la pièce formée avant interruption.

3. Procédé selon la revendication 1, selon lequel, après avoir introduit le corps étranger dans le corps, l'étape de reprise comporte des cycles de dépose de couche et de mise en fusion en sorte de compléter la cavité en en faisant converger les parois au-dessus du corps étranger.

4. Procédé selon l'une quelconque des revendications 1 à 3, selon lequel on forme deux cavités dans lesquelles on intègre deux corps.

5. Procédé selon l'une quelconque des revendications 1 à 3, selon lequel on forme une cavité dans laquelle on intègre un corps solide et un fluide.

6. Procédé selon l'une quelconque des revendications 1 à 5, dans lequel la fabrication additive de la pièce est accompagnée d'une formation par fabrication additive d'une paroi de confinement à contour fermé, entourant cette pièce au plus près sur toute sa hauteur.

7. Pièce obtenue par le procédé selon l'une quelconque des revendications 1 à 6, comportant au moins une cavité contenant au moins un corps étranger, solide, liquide ou pulvérulent, ce corps présentant une interface de reprise de fusion sélective par laser se prolongeant dans le corps jusqu'à la cavité.

8. Pièce selon la revendication 7, dont la cavité est délimitée par une portion comportant des parois convergeant l'une vers l'autre à partir de l'interface.

9. Pièce selon la revendication 7, dont la cavité est bordée par un plafond formé d'une pièce rapportée.

10. Pièce selon l'une quelconque des revendications 7 à 9, dont la cavité est débouchante.

11. Pièce selon l'une quelconque des revendications 7 à 9, dont le corps étranger est un aimant.

12. Pièce selon l'une quelconque des revendications 7 à 9, dont la cavité communique avec l'extérieur et dont le corps est formé d'un matériau produisant une réaction chimique en contact avec un milieu déterminé.

13. Pièce selon l'une quelconque des revendications 7 à 9, dont la cavité communique avec l'extérieur et dont le corps est formé d'un matériau soluble dans un liquide prédéterminé.

14. Pièce selon l'une quelconque des revendications 7 à 9 dont la cavité est un canal contenant au moins une fibre optique.

15. Pièce selon l'une quelconque des revendications 7 à 14, contenant plusieurs corps étrangers.
